# EUROPEAN PATENT SPECIFICATION

(11) **EP 2 289 782 B1**
(45) Date of publication and mention of the grant of the patent: **25.06.2014**
(21) Application number: 10174489.4
(22) Date of filing: 30.08.2010
(51) Int. Cl.: B62J 7/04, B62J 9/00

(54) **Motorcycle**
Motorrad
Motocyclette

(30) Priority: 31.08.2009 JP 2009200995
(43) Date of publication of application: 02.03.2011
(73) Proprietor: Yamaha Hatsudoki Kabushiki Kaisha (Yamaha Motor Co., Ltd.), Shizuoka 438-8501 (JP)
(72) Inventor: Onodera, Satoru, Shizuoka-ken, Shizuoka 438-8501 (JP)
(74) Representative: Grünecker, Kinkeldey, Stockmair & Schwanhäusser

(56) References cited:
- JP-A- 11 139 370
- JP-A- 11 227 652
- JP-A- 2002 255 073
- JP-A- 2003 220 987
- US-A- 3 625 405

## Description

The present invention relates to a motorcycle.

Document US 3,625,405, which is considered as the closest prior art, discloses a carrier and bracket assembly for motorcycles. A strap assembly is provided for mounting to the rear fender of a motorcycle. The strap assembly attaches a rack thereto having a generally flat supporting surface and a pad or cushion fastened to the edge of the rack confronting the motorcycle seat to form a backrest therefor. Instead of the rack, a helmet receptacle may be connected to the strap assembly. The receptacle can be locked to prevent unauthorized opening and theft of the cyclist's helmet. The surface of the receptacle confronting the motorcycle seat is padded to serve as a backrest for a guest passenger.

JP 3558371 B discloses a divided seat for a vehicle. The seat is for use in a motorcycle in particular and has a first seat portion for a main rider and a second seat portion for a tandem rider. The seat portions are formed independently from each other. The seat portions can be fixed to and detached from a vehicle structure. The seat portion for a tandem rider covers a loading surface for luggage or the like.

U. S. Patent No. 6,840,417 discloses a motorcycle trunk and a motorcycle with an attached motorcycle trunk. A trunk system is intended for motorcycles and together with luggage rack disposed in the rear area of the motorcycle, forms a plane. The result is an expanded, stable supporting surface for an additional luggage.

As for the seat disclosed by JP 3558371 B, when the second seat portion for a tandem rider is attached, a large step is formed between the second seat portion for a tandem rider and a luggage carrier. Therefore, luggage elongated in the front-back direction cannot be placed stably on the second seat portion for a tandem rider and the luggage carrier. The second seat portion for a tandem rider must be detached in order to place large luggage.

In the motorcycle according to the disclosure of the U.S. Patent No. 6,840,417, luggage elongated in the left-right direction can be loaded but luggage elongated in the front-back direction cannot be loaded. If such luggage is loaded, the total length of the motorcycle should be substantially prolonged.

It is an object of the present invention to provide a motorcycle as indicated above having an easy-to-use carrier structure that has a wide luggage loading surface and allows for uses suited for various needs.

According to the present invention said object is solved by a motorcycle having the features of independent claim 1. Preferred embodiments are laid down in the dependent claims.

Hereinafter, the present invention is illustrated and explained by means of preferred embodiments in conjunction with the accompanying drawings. In the drawings wherein:
- Fig. 1: is a side view of a motorcycle according to a preferred embodiment of the present invention.
- Fig. 2a: is a perspective view of a rear carrier structure in a standard state for the motorcycle shown in Fig. 1.
- Fig. 2b: is a perspective view of the rear carrier structure in a flat carrier state for the motorcycle shown in Fig. 1.
- Fig. 2c: is a perspective view of the rear carrier structure in a rear case loaded state for the motorcycle shown in Fig. 1.
- Fig. 3: is a side view of the rear carrier structure shown in Fig. 2a.
- Fig. 4: is a sectional view taken along line IV-IV in Fig. 3.
- Fig. 5: is a plan view of the rear carrier structure shown in Fig. 2a.
- Fig. 6: is a side view of the rear carrier structure shown in Fig. 2b.
- Fig. 7: is a sectional view taken along line VII-VII in Fig. 6.
- Fig. 8: is a perspective view of a side case shown in Figs. 2a to 2c.
- Fig. 9: is a side view of the rear carrier structure shown in Fig. 2c.
- Fig. 10: is a plan view of a carrier shown in Fig. 1.
- Fig. 11: is a plan view of a base member shown in Fig. 1.
- Fig. 12a: is a sectional view taken along line Xlla-Xlla in Figs. 3 and 5.
- Fig. 12b: is a sectional view taken along line Xllb-Xllb in Figs. 3 and 5.
- Fig. 13a: is a sectional view taken along line Xllla-Xllla in Fig. 6.
- Fig. 13b: is a sectional view taken along line Xlllb-Xlllb in Fig. 6.
- Fig. 14a: is a sectional view taken along line XIVa-XIVa in Fig. 9.
- Fig. 14b: is a sectional view taken along line XIVb-XIVb in Fig. 9.
- Fig. 15: is a schematic view showing a side of a rear carrier structure arranged in a flat carrier state according to another preferred embodiment.

Preferred embodiments will be described in detail in conjunction with the accompanying drawings in which the same or corresponding elements are designated by the same reference characters and their description will not be repeated.

A motorcycle according to a preferred embodiment may be any type of motorcycle such as a moped, a scooter, an on-road motorcycle, and an off-road motorcycle. The motorcycle may be not only two-wheeled but also three or more-wheeled. In the following description, the front, back, left, and right refer to these directions are seen from a rider seated on a rider's seat 16 that will be described.

### Structure of Motorcycle

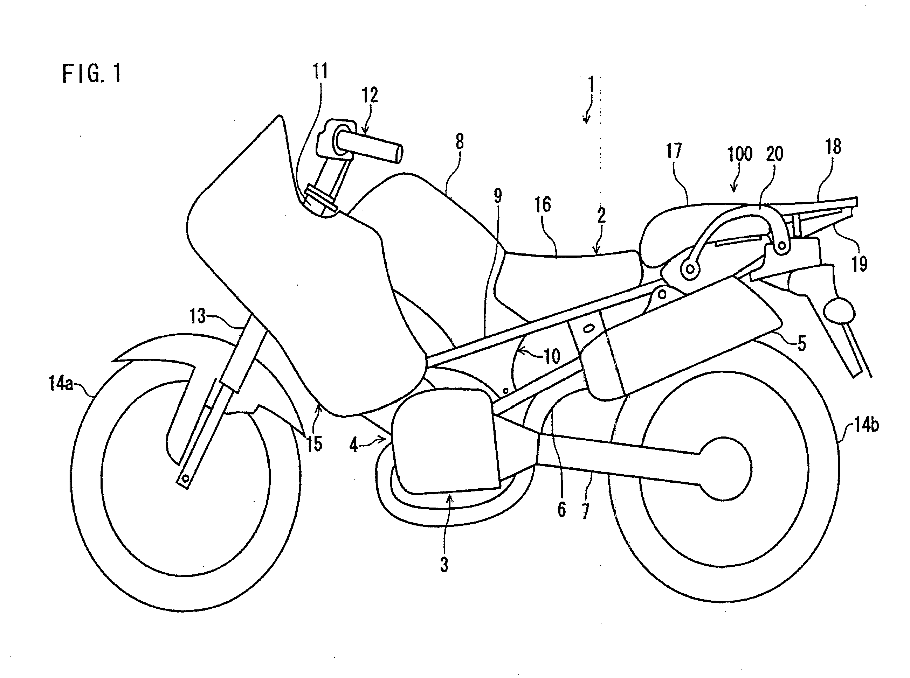

As shown in Fig. 1, the motorcycle 1 includes a vehicle body 2, a front wheel 14a provided on the front side of the vehicle body 2, and a rear wheel 14b provided on the rear side of the vehicle body 2. The vehicle body 2 includes a vehicle body frame 10. The vehicle body frame 10 has a head pipe 11 and a seat frame 9. A handle 12 is attached to the upper end of the head pipe 11. The front wheel 14a is attached rotatably to the lower end of the head pipe 11 through a front fork 13.

A power unit 3 is suspended at the vehicle body frame 10. A vehicle body cover 15 is attached to the vehicle body frame 10. The rear wheel 14b is coupled to an engine 4 through a power transmission mechanism 7. The power of the engine 4 is transmitted to the rear wheel 14b and the rear wheel 14b rotates. The engine 4 is connected with an exhaust pipe 6. The exhaust pipe 6 extends toward the back. A silencer 5 is connected to the rear end of the exhaust pipe 6.

A rider's seat 16 is provided behind a substantial center of the vehicle body 2. A fuel tank 8 is provided in front of the rider's seat 16. The rider's seat 16 is provided above the seat frame 9. The seat frame 9 extends backward and upward.

A tandem seat 17 for a tandem rider is provided behind the rider's seat 16. The tandem seat 17 is attached detachably above the vehicle body 2. A base member 19 is attached above the vehicle body 2 and behind the tandem seat 17. A carrier 18 is attached detachably above the base member 19. A grab bar 20 is provided detachably on each of the left and right sides of the tandem seat 17. The motorcycle 1 has such a rear carrier structure 100 behind the rider's seat 16.

### Three States of Rear Carrier Structure

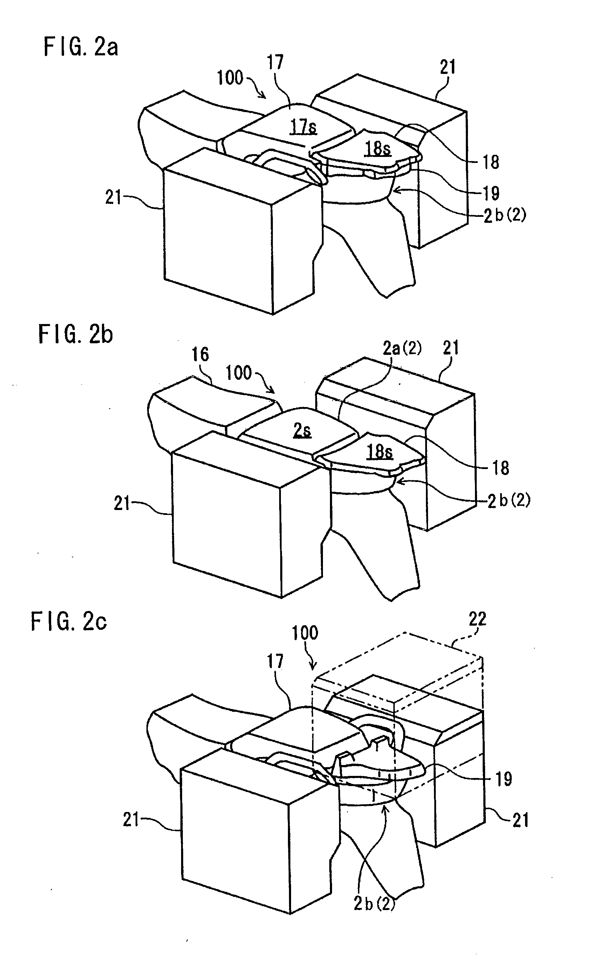

The rear carrier structure 100 can be arranged selectively in a desired one of a standard state shown in Fig. 2a, a flat carrier state shown in Fig. 2b, and a rear case loaded state shown in Fig. 2c. In the standard state shown in Fig. 2a, the tandem seat 17, the base member 19 and the carrier 18 are attached to the vehicle body 2 of the motorcycle 1. In the flat carrier state shown in Fig. 2b, the tandem seat 17, the carrier 18, and the base member 19 are detached from the standard state and the carrier 18 is reattached above the vehicle body 2. In the rear case loaded state shown in Fig. 2c, the carrier 18 is detached from the standard state. As a result, only the tandem seat 17 and the base member 19 are attached. In this case, a rear case 22 can be loaded on the base member 19 if necessary.

As shown in Figs. 2a to 2c, the vehicle body 2 includes a front portion 2a having an upper surface 2s and a rear portion 2b in a lower position than the front portion 2a. The tandem seat 17 is attached detachably above the front portion 2a of the vehicle body 2. The base member 19 is attached detachably above the rear portion 2b of the vehicle body 2. The carrier 18 is attached detachably above the base member 19 or above the rear portion 2b of the vehicle body 2.

### Standard State

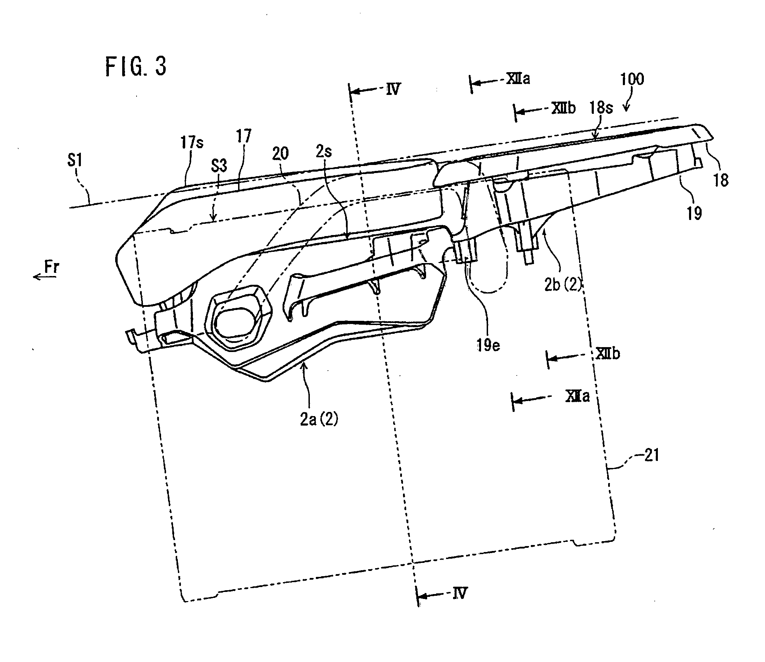

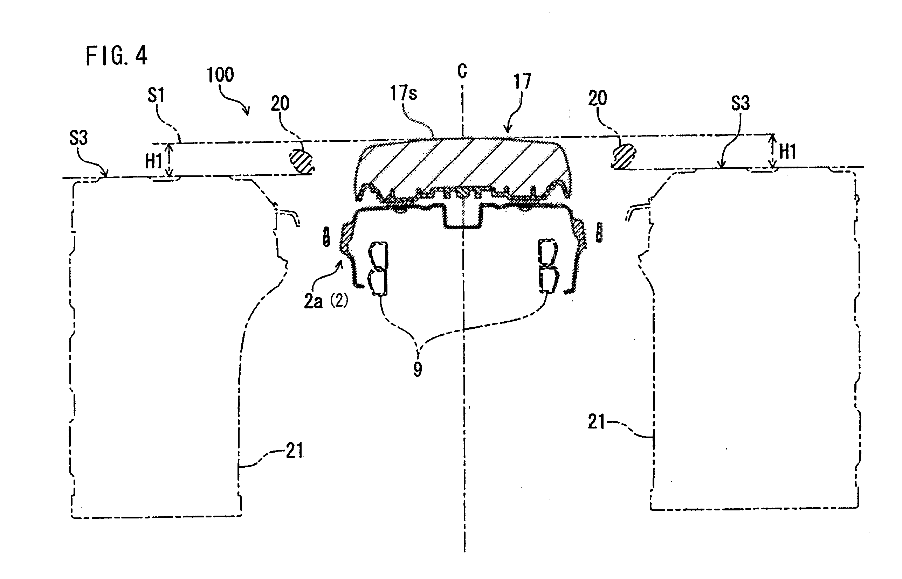

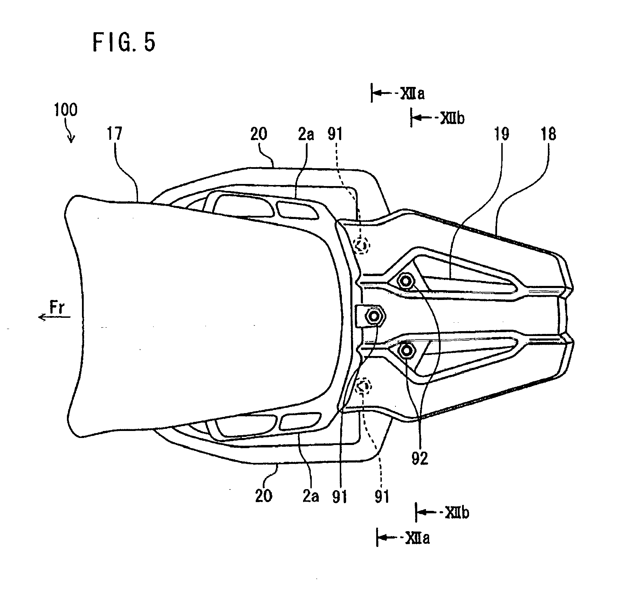

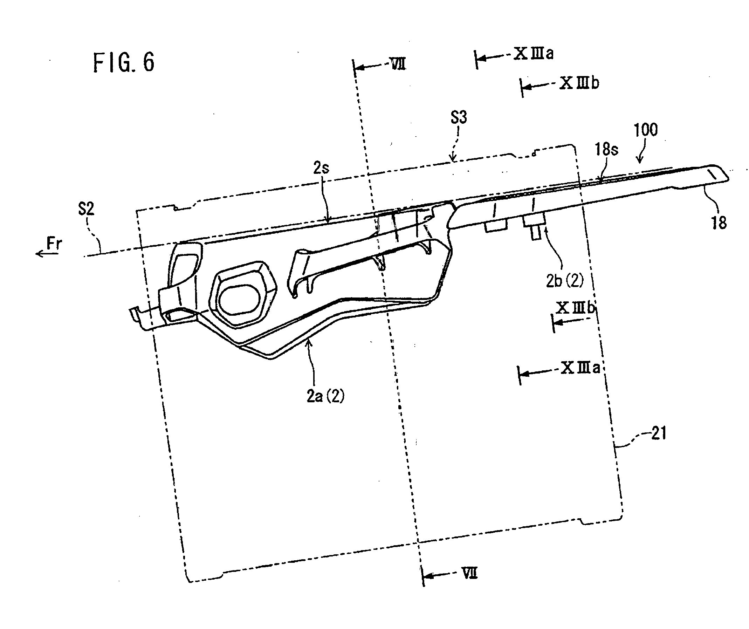

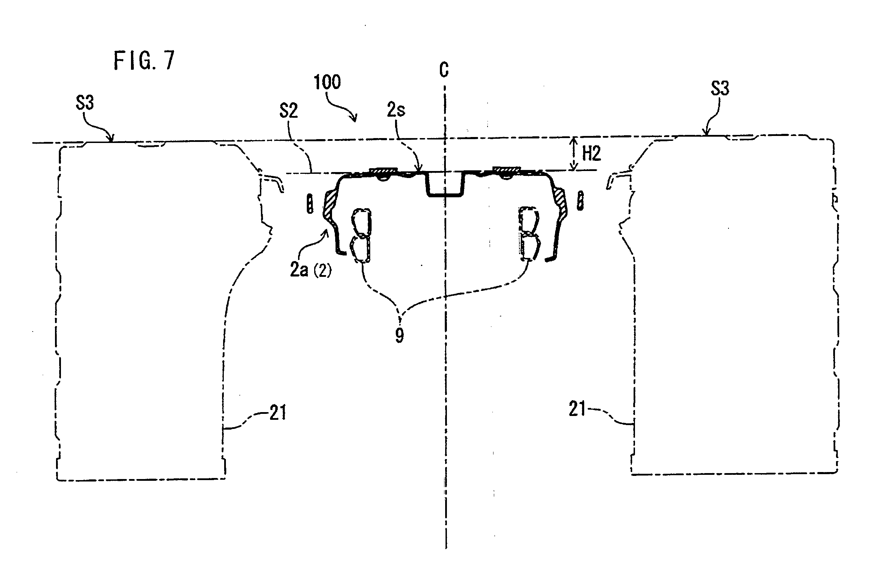

Figs. 3 to 5 show the rear carrier structure 100 in the standard state. In Figs. 3 and 5, "Fr" indicates the front. In Figs. 6, 8, 10, 11, and 15 that will be referred to in the following description, "Fr" also indicates the front. In Fig. 4, "C" indicates the center of the vehicle body 2 in the left-right direction. In Fig. 7 that will be referred to in the following description, "C" also indicates the center of the vehicle body 2 in the left-right direction.

The tandem seat 17 has an upper surface 17s facing upward. The carrier 18 has an upper surface 18s facing upward. The tandem seat 17 is provided above the front portion 2a of the vehicle body 2. The front portion 2a is a part of the vehicle body 2 and supports the tandem seat 17. However, the tandem seat 17 does not have to be provided above the front portion 2a and may be provided behind the rider's seat 16 and above another portion of the vehicle body 2. The tandem seat 17 and the base member 19 are attached directly to the vehicle body 2. The carrier 18 is attached indirectly to the vehicle body 2 through the base member 19. However, the tandem seat 17, the base member 19, and the carrier 18 may be attached to the vehicle body 2 directly or indirectly through a support member or the like.

When the rear carrier structure 100 is in the standard state, the upper surface 18s of the carrier 18 forms a plane S1 substantially same as the upper surface 17s of the tandem seat 17. More specifically, the upper surface 17s of the tandem seat 17 and the upper surface 18s of the carrier 18 form the substantially continuous plane S1. The plane S1 does not have to be a single, perfectly continuous plane and there may be a small gap between the tandem seat 17 and the carrier 18. More specifically, the plane S1 needs only be substantially continuous so that luggage can be loaded across from the upper surface 17s of the tandem seat 17 to the upper surface 18s of the carrier 18 without any problems. The plane S1 is slightly inclined downward toward the front from the horizontal direction. However, the plane S1 may be arranged horizontally.

### Flat Carrier State

Figs. 6 and 7 indicate the rear carrier structure 100 in the flat carrier state. The vehicle body 2 has an upper surface 2s facing upward at its front portion 2a. The tandem seat 17 shown in Figs. 3 and 4 is detached. The base member 19 shown in Fig. 3 is detached and the carrier 18 is attached directly to the vehicle body 2. The carrier 18 may be attached indirectly through a support member or the like other than the base member 19.

When the rear carrier structure 100 is in the flat carrier state, the upper surface 18s of the carrier 18 forms a plane S2 substantially same as the upper surface 2s of the vehicle body 2. More specifically, the upper surface 18s of the carrier 18 and the upper surface 2s of the vehicle body 2 form the substantially continuous plane S2. The plane S2 does not have to be a single, perfectly continuous plane and there may be a small gap between the front portion 2a of the vehicle body 2 and the carrier 18. More specifically, the plane S2 needs only be substantially continuous so that luggage can be loaded across from the upper surface 2s of the vehicle body 2 to the upper surface 18s of the carrier 18 without any problems. The plane S2 is slightly inclined downward toward the front from the horizontal direction. However, the plane S2 may be arranged horizontally. The plane S2 is substantially parallel to the plane S1 shown in Figs. 3 and 4.

### Side Case

As shown in Figs. 2a to 2c, the motorcycle 1 further includes a side case 21 provided on each of the right and left sides. The side case 21 may be provided only on one of the right and left sides of the vehicle body 2.

As shown in Figs. 4 and 7, the side cases 21 each have an upper surface S3 facing upward. In the standard state in Fig. 4, the plane S1 is in a higher position than the upper surface S3. There is a difference H1 between the plane S1 and the upper surface S3. In the flat carrier state in Fig. 7, the plane S2 is in a lower position than the upper surface S3. There is a difference H2 between the plane S2 and the upper surface S3. More specifically, the upper surface S3 of the side case 21 is positioned between the planes S1 and S2. The difference H1 is smaller than the difference H2. Note however that the difference H1 may be equal to or greater than the difference H2.

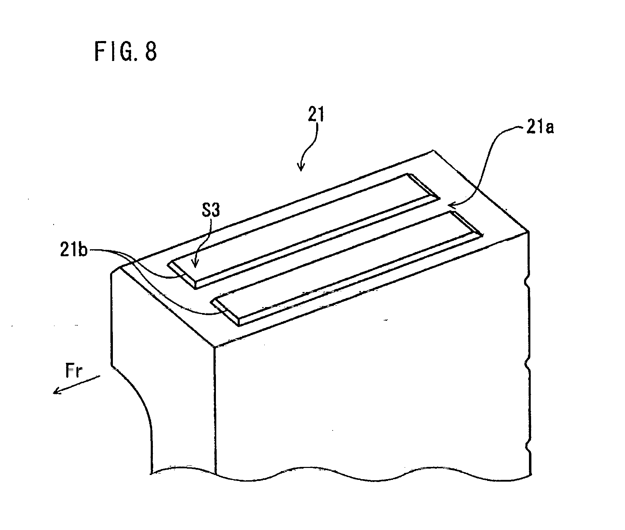

As shown in Fig. 8, the side case 21 includes two projections 21b that extend in the front-back direction. The projections 21b are formed on the upper surface S3 of the side case 21. A groove 21a that extends in the front-back direction is formed between the two projections 21b. Three or more projections 21b may be formed. In this case, the plurality of grooves 21a are formed. The side cases 21 both have such projections 21b.

### Grab Bar

In the standard state shown in Fig. 3, a grab bar 20 is attached to the vehicle body 2. In the flat carrier state shown in Fig. 6, when the side case 21 is attached, the grab bar 20 is detached from the vehicle body 2. Note however that the grab bar 20 may be maintained to be attached to the vehicle body 2. The position of the grab bar 20 is not particularly limited. The grab bar 20 is preferably arranged in a position that allows the tandem rider to have an easy access to it when the tandem rider is seated on the tandem seat 17.

### Rear Case Loaded State

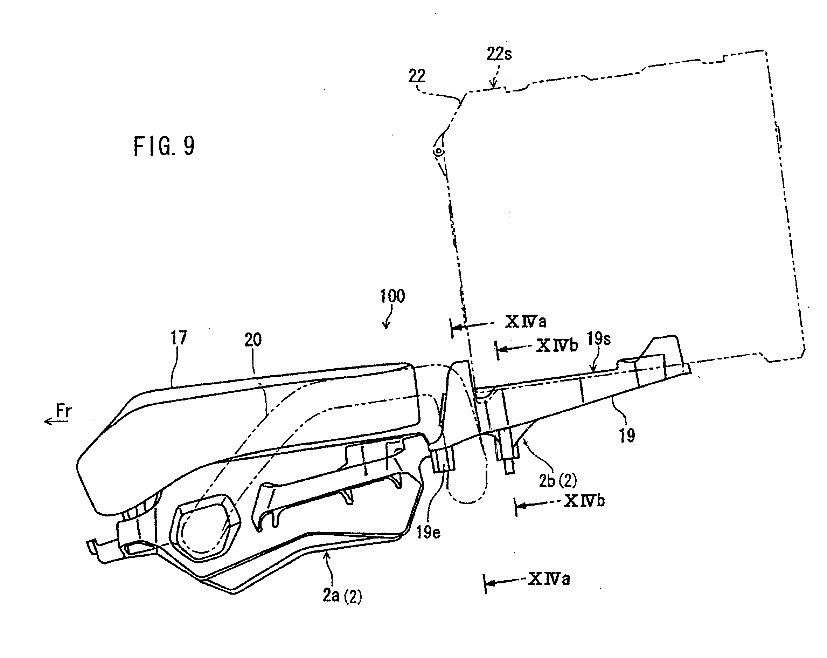

Fig. 9 shows the rear carrier structure 100 in the rear case loaded state. The base member 19 has an upper surface 19s facing upward. The carrier 18 shown in Fig. 3 is detached. Therefore, the rear case 22 can be provided on the upper surface 19s of the base member 19 in place of the carrier 18. The rear case 22 has an upper surface 22s. The upper surface 19s of the base member 19 is slightly inclined downward toward the front from the horizontal direction. However, the upper surface 19s may be arranged horizontally.

In the rear case loaded state, the tandem seat 17 as well as the carrier 18 may be detached. In this case, the grab bar 20 is also detached.

### Structure for Attachment and Detachment

The rear carrier structure 100 can be arranged in the flat carrier state and the rear case loaded state by using only the bolts used in the standard state. As shown in Fig. 5, three short bolts 91 and two long bolts 92 are used to arrange the structure in the standard state. The tandem sheet 17 is attached to the vehicle body 2 with an additional bolt or the like besides the short bolts 91 and the long bolts 92.

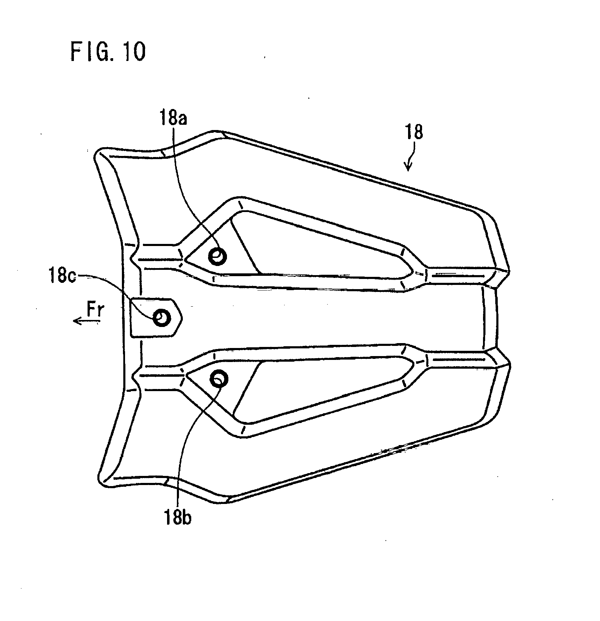

As shown in Fig. 10, the carrier 18 has holes 18a, 18b, and 18c. The hole 18c is provided substantially in the center of the front portion of the carrier 18 in the left-right direction. The holes 18a and 18b are provided behind the hole 18c and apart from each other in the left-right direction.

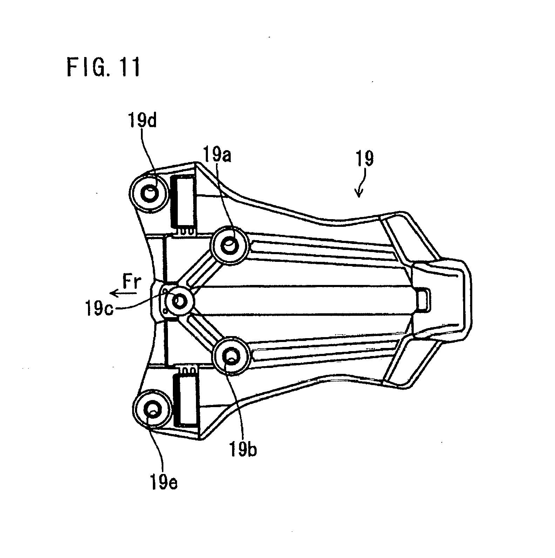

As shown in Fig. 11, the base member 19 has holes 19a, 19b, 19c, 19d, and 19e. The hole 19c is provided substantially in the center of the front portion of the base member 19 in the left-right direction. The holes 19a and 19b are provided behind the hole 19c and apart from each other in the left-right direction. The holes 19d and 19e are provided in front of the hole 19c and apart from each other in the left-right direction.

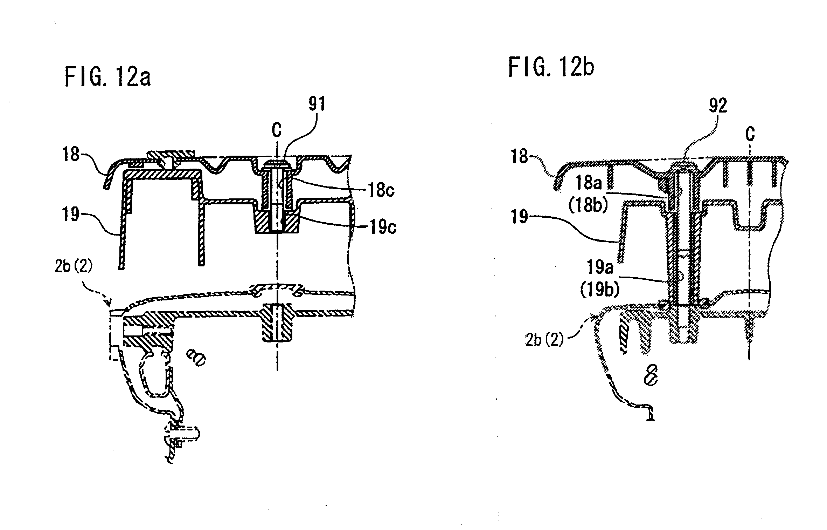

Firstly, a method of arranging the structure in the standard state will be described. As shown in Fig. 12a, one short bolt 91 is inserted through the hole 18c of the carrier 18 and fastened to the hole 19c of the base member 19. As shown in Figs. 5 and 11, the two short bolts 91 are inserted through the holes 19d and 19e of the base member 19 and fastened to the vehicle body 2. As shown in Fig. 12b, the two long bolts 92 are inserted through the holes 18a and 18b of the carrier 18 and then through the holes 19a and 19b of the base member 19 and fastened to the vehicle body 2. In this way, using the three short bolts 91 and the two long bolts 92, the carrier 18 and the base member 19 are attached to the vehicle body 2.

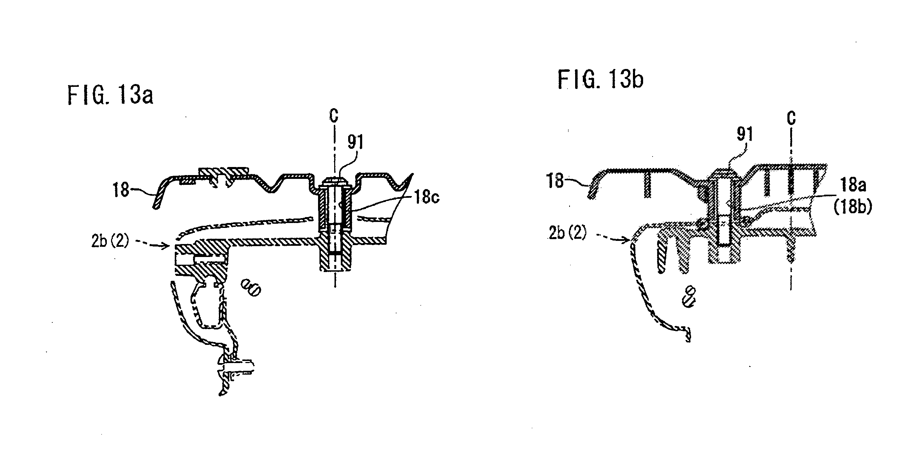

Secondly, a method of arranging the structure in the flat carrier state will be described. As shown in Fig. 13a, one short bolt 91 is inserted through the hole 18c of the carrier 18 and fastened to the vehicle body 2. As shown in Fig. 13b, the two short bolts 91 are inserted through the holes 18a and 18b of the carrier 18 and fastened to the vehicle body 2. In this way, using the three short bolts 91, the carrier 18 is attached to the vehicle body 2. The two long bolts 92 are not used.

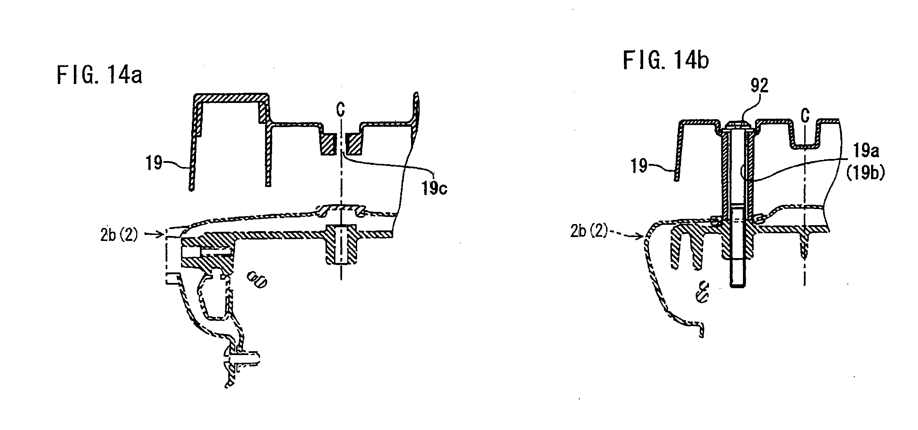

Thirdly, a method of arranging the structure in the rear case loaded state will be described. As shown in Fig. 14a, none of the bolts is inserted through the hole 19c of the base member 19. Similarly to the standard state, the two short bolts 91 are inserted through the holes 19d and 19e of the base member 19 and fastened to the vehicle body 2. As shown in Fig. 14b, the two long bolts 92 are inserted through the holes 19a and 19b of the base member 19 and fastened to the vehicle body 2. In this way, using the two short bolts 91 and the two long bolts 92, the base member 19 is attached to the vehicle body 2.

### Modifications

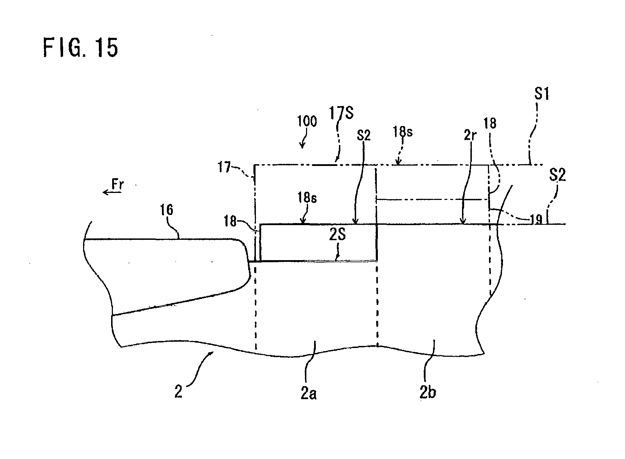

In place of the above-described rear carrier structure 100, a rear carrier structure 100 shown in Fig. 15 may be employed. The vehicle body 2 has a rear portion 2b having an upper surface 2r and a front portion 2a in a lower position than the rear portion 2b. In the standard state, the tandem seat 17 is attached detachably above the front portion 2a of the vehicle body 2. The base member 19 is attached detachably above the rear portion 2b of the vehicle body 2. The carrier 18 is attached detachably above the base member 19. In this case, the upper surface 17s of the tandem seat 17 and the upper surface 18s of the carrier 18 form a substantially continuous plane S1. In the flat carrier state, the tandem seat 17 is detached. The carrier 18 is attached detachably above the front portion 2a of the vehicle body 2. The base member 19 is detached. In this case, the upper surface 18s of the carrier 18 and the upper surface 2r of the rear portion 2b of the vehicle body 2 form a substantially continuous plane S2.

### Effects of Preferred Embodiments

As in the foregoing, according to the preferred embodiments, when the carrier structure 100 is in the standard state, the tandem seat 17 is attached above the vehicle body 2 and the base member 19 is attached above the vehicle body 2 and behind the tandem seat 17, while the carrier 18 is attached above the base member 19. In this way, the upper surface 18s of the carrier 18 forms a plane S1 substantially same as the upper surface 17s of the tandem seat 17. Therefore, luggage elongated in the front-back direction can be stably loaded on the tandem seat 17 and the carrier 18.

When the rear carrier structure 100 is in the flat carrier state, the tandem seat 17 and the base member 19 are detached and the carrier 18 is attached above the vehicle body 2. In this way, the upper surface 18s of the carrier 18 forms a plane S2 substantially same as the upper surface 2s of the vehicle body 2. Therefore, luggage elongated in the front-back direction can be stably loaded on the vehicle body 2 and the carrier 18.

In the standard state, even when a tandem rider is seated on the tandem seat 17, luggage can be loaded on the carrier 18. On the other hand, in the flat carrier state, the rigidity of the vehicle body 2 and the carrier 18 is higher than the rigidity of the tandem seat 17 in most cases, so that luggage can be supported more firmly than in the standard state.

In this way, the motorcycle 1 allows selection between the standard state and the flat carrier state depending on the presence/absence of luggage or a tandem rider. Therefore, the luggage loading surface can be wider and easier to use and suitably arranged for various needs.

Since the side case 21 is provided on the left side or/and the right side of the vehicle 2, luggage can be stored in the side case 21 and another luggage can be loaded on the upper surface S3 of the side case 21.

In the flat carrier state, luggage elongated in the left-right direction can be loaded on the upper surfaces S3 of the left and right side cases 21 across the vehicle body 2. In this way, the luggage can be loaded more stably on the side cases 21 than on the tandem seat 17 in the standard state. On the other hand, in the standard state, luggage can be loaded on the carrier 18 and the side cases 21 even when a tandem rider is seated on the tandem seat 17.

A plurality of projections 21b that extend in the front-back direction are formed on the upper surface S3 of the side case 21, so that luggage loaded on the side case 21 is not easily shifted in the left-right direction and is supported stably.

When the rear carrier structure 100 is in the rear case loaded state, the carrier 18 is detached and only the base member 19 is attached. Therefore, the rear case 22 can be placed on the base member 19.

When the rear carrier structure 100 has its state changed among the standard state, the flat carrier state, and the rear case loaded state, the holes 18a, 18b, 18c, 19a, 19b, and 19c and the bolts 91 and 92 are commonly used, so that the carrier 18 and the base member 19 can be attached/detached in a simple manner and the number of necessary parts can be reduced.

The embodiments discloses a motorcycle comprising a vehicle body 2 having an upper surface 2s, a tandem seat 17 attached detachably above the vehicle body 2 and having an upper surface 17s, and a base member 19 attached detachably above the vehicle body 2 and behind the tandem seat 17. A carrier 18 is attached detachably above the base member 19 or above the vehicle body 2 and having an upper surface 18s, and the upper surface 18s of the carrier 18 forming a first plane S1 when the carrier 18 is attached above the base member 19 and a second plane S2 when the carrier 18 is attached above the vehicle body 2. The first plane S1 is same as the upper surface 17s of the tandem seat 17 when the carrier 18 is attached above the base member 19 and the second plane S2 is same as the upper surface 2s of the vehicle body 2 when the carrier 18 is attached above the vehicle body 2.

According to one embodiment, the vehicle body 2 comprises a front portion 2a having the upper surface 2s, and a rear portion 2b in a lower position than the front portion 2a. The tandem seat 17 is attached detachably above the front portion 2a of the vehicle body 2. The base member 19 is attached detachably above the rear portion 2b of the vehicle body 2. The carrier 18 is attached detachably above the base member 19 or above the rear portion 2b of the vehicle body 2.

According to another embodiment the vehicle body 2 comprises a rear portion 2b having the upper surface 2s; and a front portion 2a in a lower position than the rear portion 2b. The tandem seat 17 is attached detachably above the front portion 2a of the vehicle body. The base member 19 is attached detachably above the rear portion 2b of the vehicle body 2. The carrier 18 is attached detachably above the base member 19 or above the front portion 2a of the vehicle body 2.

The motorcycle further comprises a first side case 21 provided on one of the left and right sides of the vehicle and having an upper surface S3 positioned between the first plane S1 and the second plane S2. The motorcycle further comprises a second side case 21 provided on the other of the left and right sides of the vehicle body 2 and having an upper surface S3 positioned between the first plane S1 and the second plane S2. The side case 21 comprises a plurality of projections 21 b formed on the upper surface of the side case to extend in the front-back direction.

The motorcycle further comprises a rear case 22 loaded on the base member 19, with the carrier 18 detached from the base member 19.

The motorcycle further comprises a pair of grab bars 20 detachably attached to the vehicle body 2 on left and right side of the tandem seat 17.

According to an embodiment, the base member 19 is provided with a plurality of attachment holes **19a, 19b, 19c, 19d, 19e**, and a carrier 18 is provided with a plurality of attachment holes **18a, 18b, 18c**. At least one of the attachment holes 19c of the base member 19 and at least one of the attachment holes 18c of the carrier 18 are adapted to fix the carrier 18 on the base member 19 by a first attachment bolt 91, and at least one further of the attachment holes 19a, 19b of the base member 19 and at least one further of the attachment holes 18a, 18b of the carrier 18 are adapted to support the base member 19 between the carrier 18 **and the vehicle body 2** with the carrier 18 fixed on the vehicle body 2 by a second attachment bolt 92 or **at least one further of the attachment holes 19a, 19b of the base member 19** is adapted to fix the base member 19 on the vehicle body 2 with the carrier 18 detached from the vehicle body 2 by a second attachment bolt 92. The first attachment bolt 91 is shorter than the second attachment bolt 92. The attachment holes 18a, 18b, 18c of the carrier 18 are adapted to fix **the carrier 18** on the vehicle body 2 with the base member 19 detached from the vehicle body 2 by the first attachment bolt 91. At least one further of the attachment holes 19d, 19e of the base member 19 is adapted to fix the base member 19 on the vehicle body 2 by the first attachment bolt 91.

The embodiment discloses a motorcycle 1 that includes a vehicle body 2, a tandem seat 17, a base member 19, and a carrier 18. The vehicle body 2 has an upper surface 2s. The tandem seat 17 is attached detachably above the vehicle body 2 and has an upper surface 17s. The base member 19 is attached detachably above the vehicle body 2 and behind the tandem seat 17. The carrier 18 is attached detachably above the base member 19 or above the vehicle body 2. The carrier 18 has an upper surface 18s. When the carrier 18 is attached above the base member 19, the upper surface 18s of the carrier 18 forms a plane S1 substantially same as the upper surface of the tandem seat 17. When the carrier 18 is attached above the vehicle body 2, the upper surface 18s of the carrier 18 forms a plane S2 substantially same as the upper surface 2s of the vehicle body 2. Consequently, the motorcycle 1 has an easy-to-use carrier structure 100 that has a wide luggage loading surface and allows for uses suited for various needs.

## Claims

1. A motorcycle comprising vehicle body (2), a rider's seat (16) and a rear carrier structure (100) with tandem seat (17) for a tandem rider provided behind the rider's seat (16), a base member (19) and a carrier (18), the rear carrier structure (100) is adapted to be arranged selectively in one of a standard state, a flat carrier state, and a rear case loaded state, wherein:
- in the standard state, the tandem seat (17), the base member (19) and the carrier (18) are attached above the vehicle body (2) with the carrier (18) attached above the base member (19), the tandem seat (17) has an upper surface (17s) facing upward, the carrier (18) has an upper surface (18s) facing upward, the upper surface (18s) of the carrier (18) forms a plane (S1) substantially same as the upper surface (17s) of the tandem seat (17), so that luggage can be loaded across from the upper surface (17s) of the tandem seat (17) to the upper surface (18s) of the carrier (18);
- in the flat carrier state, the tandem seat (17), the carrier (18), and the base member (19) are detached and the carrier (18) is reattached above the vehicle body (2), the upper surface (18s) of the carrier (18) forms a plane (S2) substantially same as an upper surface (2s) of the vehicle body (2), so that luggage can be loaded across from the upper surface (2s) of the vehicle body (2) to the upper surface (18s) of the carrier (18);
- in the rear case loaded state, the carrier (18) is detached and the base member (19) is attached, so that a rear case (22) can be loaded on the base member (19).

2. A motorcycle according to claim 1, wherein the vehicle body (2) comprises:
a front portion (2a) having the upper surface (2s); and
a rear portion (2b) in a lower position than the front portion (2a),
the tandem seat (17) is attached detachably above the front portion (2a) of the vehicle body (2),
the base member (19) is attached detachably above the rear portion (2b) of the vehicle body (2), and
the carrier (18) is attached detachably above the base member (19), or the carrier (18) is attached detachably above the rear portion (2b) of the vehicle body (2) and the base member (19) is detached.

3. A motorcycle according to claim 1, wherein the vehicle body (2) comprises:
a rear portion (2b) having the upper surface (2R); and
a front portion (2a) in a lower position than the rear portion (2b),
the tandem seat (17) is attached detachably above the front portion (2a) of the vehicle body (2),
the base member (19) is attached detachably above the rear portion (2b) of the vehicle body (2), and
the carrier (18) is attached detachably above the base member (19), or the carrier (18) is attached detachably above the front portion (2a) of the vehicle body (2) and the tandem seat (17) and the base member (19) are detached.

4. A motorcycle according to at least one of the claims 1 to 3, further comprising a first side case (21) provided on one of the left and right sides of the vehicle and having an upper surface (S3) positioned between the first plane (S1) and the second plane (S2).

5. A motorcycle according to claim 4, further comprising a second side case (21) provided on the other of the left and right sides of the vehicle body (2) and having an upper surface (S3) positioned between the first plane (S1) and the second plane (S2).

6. A motorcycle according to claim 4, wherein the first side case (21) comprises a plurality of projections (21 b) formed on the upper surface of the first side case to extend in the front-back direction.

7. A motorcycle according to claim 5, wherein the second side case (21) comprises a plurality of projections (21 b) formed on the upper surface of the second side case to extend in the front-back direction.

8. A motorcycle according to at least one of the claims 1 to 7, further comprising a rear case (22) loaded on the base member (19), with the carrier (18) detached from the base member (19).

9. A motorcycle according to at least one of the claims 1 to 8, further comprising a pair of grab bars (20) detachably attached to the vehicle body (2) on left and right side of the tandem seat (17).

10. A motorcycle according to at least one of the claims 1 to 9, further comprising at least a first attachment bolt (91) and at least a second attachment bolt (92), the first attachment bolt (91) being shorter than the second attachment bolt (92), wherein the base member (19) is provided with a plurality of attachment holes (19a, 19b, 19c, 19d, 19e),
the carrier (18) is provided with a plurality of attachment holes (18a, 18b, 18c),
at least one of the attachment holes (19c) of the base member (19) and at least one of the attachment holes (18c) of the carrier (18) are adapted to fix the carrier (18) on the base member (19) by the first attachment bolt (91), and
at least one further of the attachment holes (19a, 19b) of the base member (19) and at least one further of the attachment holes (18a, 18b)) of the carrier (18) are adapted to support the base member (19) between the carrier (18) and the vehicle body (2) with the carrier (18) fixed on the vehicle body (2) or at least one further of the attachment holes (19a, 19b) of the base member (19) is adapted to fix the base member (19) on the vehicle body (2) with the carrier (18) detached from the vehicle body (2) by the second attachment bolt (92).

11. A motorcycle according to claim 10, wherein the attachment holes (18a, 18b, 18c) of the carrier (18) are adapted to fix the carrier (18) on the vehicle body (2) with the base member (19) detached from the vehicle body (2) by the first attachment bolt (91).

12. A motorcycle according to claim 10 or 11, wherein at least one further of the attachment holes (19d, 19e) of the base member (19) is adapted to fix the base member (19) on the vehicle body (2) by the first attachment bolt (91).

## Patentansprüche

1. Ein Motorrad mit einem Fahrzeugaufbau (2), einem Fahrersitz (16) und einer hinteren Trägerstruktur (100) mit einem Beifahrersitz (17) für einen Beifahrer, vorgesehen hinter dem Fahrersitz (16), ein Basiselement (19) und ein Träger (18), die hintere Trägerstruktur (100) ist angepasst, um selektiv in einem von einem Standard-Zustand, einem Flach-Träger-Zustand und einem Rück-Koffer-Pack-Zustand angeordnet zu sein, wobei:
- in dem Standard-Zustand der Beifahrersitz (17), das Basiselement (19) und der Träger (18) über dem Fahrzeugaufbau (2) angebracht ist, mit dem Träger (18) angebracht über dem Basiselement (19), der Beifahrersitz (17) hat eine obere Fläche (17s), die nach oben weist, der Träger (18) hat eine obere Fläche (18s) die nach oben weist, die obere Fläche (18s) des Trägers (18) bildet eine Ebene (S1), die im Wesentlichen die gleich ist wie die obere Fläche (17s) des Beifahrersitzes (17), sodass Gepäck quer von der oberen Fläche (17s) des Beifahrersitzes (17) zu der oberen Fläche (18s) des Trägers (18) geladen werden kann;
- in dem Flach-Träger-Zustand sind der Beifahrersitz (17), der Träger (18), und das Basiselement (19) entfernt, und der Träger (18) ist wieder über dem Fahrzeugaufbau (2) befestigt, die obere Fläche (18s) des Trägers (18) bildet eine Ebene (S2), die im Wesentlichen die gleiche ist wie eine obere Fläche (2s) des Fahrzeugaufbaus (2), sodass Gepäck quer von der oberen Fläche (2s) des Fahrzeugaufbaus (2) zu der oberen Fläche (18s) des Trägers (18) geladen werden kann;
- in dem Rück-Koffer-Pack-Zustand ist der Träger (18) entfernt und das Basiselement (19) ist angebracht, sodass ein hinterer Koffer (22) auf das Basiselement (19) geladen werden kann.

2. Ein Motorrad gemäß Anspruch 1, wobei der Fahrzeugaufbau (2) umfasst:
einen vorderen Abschnitt (2a), der die obere Fläche (2s) aufweist; und
ein hinterer Abschnitt (2b) in einer niedrigeren Position als der vordere Abschnitt (2a),
der Beifahrersitz (17) ist entfernbar über dem vorderen Abschnitt (2a) des Fahrzeugaufbaus (2) angebracht,
das Basiselement (19) ist entfernbar über den hinteren Abschnitt (2b) des Fahrzeugaufbaus (2) angebracht, und
der Träger (18) ist entfernbar über dem Basiselement (19) angebracht, oder der Träger (18) ist entfernbar über dem hinteren Abschnitt (2b) des Fahrzeugaufbaus (2) angebracht und das Basiselement (19) ist entfernt.

3. Ein Motorrad gemäß Anspruch 1, wobei der Fahrzeugaufbau aufweist:
einen hinteren Abschnitt (2b), der eine obere Fläche (2R) aufweist; und
einen vorderen Abschnitt (2a) in einer niedrigeren Position als der hintere Abschnitt (2b),
der Beifahrersitz (17) ist entfernbar über dem vorderen Abschnitt (2a) des Fahrzeugaufbaus (2) angebracht,
das Basiselement (19) ist entfernbar über dem hinteren Abschnitt (2b) des Fahrzeugaufbaus (2) angebracht, und
der Träger (18) ist entfernbar über dem Basiselement (19) angebracht, oder der Träger (18) ist entfernbar über dem vorderen Abschnitt (2a) des Fahrzeugaufbaus (2) angebracht und der Beifahrersitz (17) und das Basiselement (19) sind entfernt.

4. Ein Motorrad gemäß zumindest einem der Ansprüche 1 bis 3, das weiterhin aufweist:
einen ersten Seitenkoffer (21), der an einer der linken oder rechten Seite des Fahrzeugs vorgesehen ist und einer obere Fläche (S3) hat, angeordnet zwischen der ersten Ebene (S1) und der zweiten Ebene (S2).

5. Ein Motorrad gemäß Anspruch 4, das weiterhin aufweist:
einen zweiten Seitenkoffer (21), der an der anderen der linken und rechten Seiten des Fahrzeugaufbaus (2) vorgesehen ist und eine obere Fläche (S3) hat, angeordnet zwischen der ersten Ebene (S1) und der zweiten Ebene (S2).

6. Ein Motorrad gemäß Anspruch 4, wobei der erste Seitenkoffer (21) eine Mehrzahl von Vorsprüngen (21 b) aufweist, die an der oberen Fläche des ersten Seitenkoffers ausgebildet sind, um sich in die Vor-Rück-Richtung zu erstrecken.

7. Ein Motorrad gemäß Anspruch 5, wobei der zweite Seitenkoffer (21) eine Mehrzahl von Vorsprüngen (21 b) aufweist, die an der oberen Fläche des zweiten Seitenkoffers ausgebildet sind um sich in die Vor-Rück-Richtung zu erstrecken.

8. Ein Motorrad gemäß zumindest einem der Ansprüche 1 bis 7, das weiterhin aufweist einen hinteren Koffer (22), geladen auf dem Basiselement (19), mit dem Träger (18) von dem Basiselement (19) entfernt.

9. Ein Motorrad gemäß zumindest einem der Ansprüche 1 bis 8, das weiterhin aufweist ein Paar von Griffstangen (20), entfernbar an dem Fahrzeugaufbau (2) an der linken und rechten Seite des Beifahrersitzes (17) angebracht.

10. Ein Motorrad gemäß zumindest einem der Ansprüche 1 bis 9, das weiterhin aufweist zumindest einen ersten Befestigungsbolzen (91) und zumindest einen zweiten Befestigungsbolzen (92), der erste Befestigungsbolzen (91) ist kürzer als der zweite
Befestigungsbolzen (92), wobei das Basiselement (19) mit einer Mehrzahl von Befestigungslöchern (19a, 19b, 19c, 19d, 19e) ausgebildet ist,
der Träger (18) ist mit einer Mehrzahl von Befestigungslöchern (18a, 18b, 18c) vorgesehen,
zumindest eines der Befestigungslöcher (19c) des Basiselements (19) und zumindest eines der Befestigungslöcher (18c) des Trägers (18) sind ausgebildet um den Träger (18) an dem Basiselement (19) durch den ersten Befestigungsbolzen (91) zu fixieren, und zumindest ein weiteres der Befestigungslöcher (19a, 19b) des Basiselements (19) und zumindest ein weiteres der Befestigungslöcher (18a, 18b) des Trägers (18) sind ausgebildet um das Basiselement (19) zwischen dem Träger (18) und dem Fahrzeugaufbau (2) zu lagern mit dem Träger (18) fixiert an dem Fahrzeugaufbau (2) oder zumindest ein weiteres der Befestigungslöcher (19a, 19b) des Basiselements (19) ist ausgebildet um das Basiselement (19) an dem Fahrzeugaufbau (2) durch den zweiten Befestigungsbolzen (92) zu fixieren, mit dem Träger (18) entfernt von dem Fahrzeugaufbau (2).

11. Ein Motorrad gemäß Anspruch 10, wobei die Befestigungslöcher (18a, 18b, 18c) des Trägers (18) ausgebildet sind um den Träger (18) an dem Fahrzeugaufbau (2) durch den ersten Befestigungsbolzen (91) zu fixieren, mit dem Basiselement (19) entfernt von dem Fahrzeugaufbau (2).

12. Ein Motorrad gemäß Anspruch 10 oder 11, wobei zumindest ein weiteres der Befestigungslöcher (19d, 19e) des Basiselements (19) ausgebildet ist, um das Basiselement (19) an dem Fahrzeugaufbau (2) durch den zweiten Befestigungsbolzen (91) zu fixieren.

## Revendications

1. Motocyclette comprenant un corps de véhicule (2), un siège de pilote (16) et une structure de support arrière (100) avec un siège en tandem (17) pour un passager en tandem prévu derrière le siège de pilote (16), un élément de base (19) et un support (18), la structure de support arrière (100) étant adaptée à être agencée sélectivement dans un état parmi un état normal, un état de support plat et un état chargé d'un coffre arrière, dans laquelle :
- dans l'état normal, le siège en tandem (17), l'élément de base (19) et le support (18) sont fixés au-dessus du corps de véhicule (2) avec le support (18) fixé au-dessus de l'élément de base (19), le siège en tandem (17) comporte une surface supérieure (17a) dirigée vers le haut, le support (18) comporte une surface supérieure (18a) dirigée vers le haut, la surface supérieure (18a) du support (18) forme un plan (S1) sensiblement identique à celui de la surface supérieure (17a) du siège en tandem (17), de sorte qu'un bagage puisse être chargé au-delà de la surface supérieure (17a) du siège en tandem (17) sur la surface supérieure (18a) du support (18) ;
- dans l'état de support plat, le siège en tandem (17), le support (18) et l'élément de base (19) sont détachés et le support (18) est ré-attaché au-dessus du corps de véhicule (2), la surface supérieure (18a) du support (18) forme un plan (S2) sensiblement identique à celui de la surface supérieure (2a) du corps de véhicule (2), de sorte qu'un bagage puisse être chargé au-delà de la surface supérieure (2a) du corps de véhicule (2) sur la surface supérieure (18a) du support (18) ;
- dans l'état chargé d'un coffre arrière, le support (18) est détaché et l'élément de base (19) est attaché, de sorte qu'un coffre arrière (22) puisse être chargé sur l'élément de base (19).

2. Motocyclette selon la revendication 1, dans laquelle le corps de véhicule (2) comprend :
- une partie avant (2a) comportant la surface supérieure (2s) ;
- une partie arrière (2b) dans une position inférieure à la partie avant (2a) ;
- le siège en tandem (17) est fixé de manière détachable au-dessus de la partie avant (2a) du corps de véhicule (2) ;
- l'élément de base (19) est fixé de manière détachable au-dessus de la partie arrière (2b) du corps de véhicule (2) ; et
- le support (18) est fixé de manière détachable au-dessus de l'élément de base (19) ou le support (18) est fixé de manière détachable au-dessus de la partie arrière (2b) du corps de véhicule (2) et l'élément de base (19) est détaché.

3. Motocyclette selon la revendication 1, dans laquelle le corps de véhicule (2) comprend :
- une partie arrière (2b) comportant la surface supérieure (2r) ;
- une partie avant (2a) dans une position inférieure à la partie arrière (2b) ;
- le siège en tandem (17) est fixé de manière détachable au-dessus de la partie avant (2a) du corps de véhicule (2) ;
- l'élément de base (19) est fixé de manière détachable au-dessus de la partie arrière (2b) du corps de véhicule (2) ; et
- le support (18) est fixé de manière détachable au-dessus de l'élément de base (19) ou le support (18) est fixé de manière détachable au-dessus de la partie avant (2a) du corps de véhicule (2) et le siège en tandem (17) et l'élément de base (19) sont détachés.

4. Motocyclette selon au moins une des revendications 1 à 3, comprenant en outre un premier coffre latéral (21) disposé sur un des côtés gauche ou droit du véhicule et comportant une surface supérieure (S3) positionnée entre le premier plan (S1) et le deuxième plan (S2).

5. Motocyclette selon la revendication 4, comprenant en outre un second coffre latéral (21) disposé sur l'autre des côtés gauche ou droit du corps de véhicule (2) et comportant une surface supérieure (S3) positionnée entre le premier plan (S1) et le deuxième plan (S2).

6. Motocyclette selon la revendication 4, dans laquelle le premier coffre latéral (21) comprend une pluralité de saillies (21b) formées sur la surface supérieure du premier coffre latéral pour s'étendre dans la direction d'avant en arrière.

7. Motocyclette selon la revendication 5, dans laquelle le second coffre latéral (21) comprend une pluralité de saillies (21b) formées sur la surface supérieure du second coffre latéral pour s'étendre dans la direction d'avant en arrière.

8. Motocyclette selon au moins une des revendications 1 à 7, comprenant en outre un coffre arrière (22) chargé sur l'élément de base (19), le support (18) étant détaché de l'élément de base (19).

9. Motocyclette selon au moins une des revendications 1 à 8, comprenant en outre une paire de barres de saisie (20) fixées de manière détachable au corps de véhicule (2) sur les côtés gauche et droit du siège en tandem (17).

10. Motocyclette selon au moins une des revendications 1 à 9, comprenant en outre au moins un premier boulon de fixation (91) et au moins un second boulon de fixation (92), le premier boulon de fixation (91) étant plus court que le second boulon de fixation (92), l'élément de base (19) étant pourvu d'une pluralité de trous de fixation (19a, 19b, 19c, 19d, 19^{e}) ;
- le support (18) est pourvu d'une pluralité de trous de fixation (18a, 18b, 18c) ;
- au moins un des trous de fixation (19c) de l'élément de base (19) et au moins un des trous de fixation (18c) du support (18) étant adaptés à fixer le support (18) sur l'élément de base (19) par le premier boulon de fixation (91) ; et
- au moins un autre des trous de fixation (19a, 19b) de l'élément de base (19) et au moins un autre des trous de fixation (18a, 18b) du support (18) étant adaptés à supporter l'élément de base (19) entre le support (18) et le corps de véhicule (2) avec le support (18) fixé sur le corps de véhicule (2) ou au moins un autre des trous de fixation (19a, 19b) de l'élément de base (19) étant adapté à fixer l'élément de base (19) sur le corps de véhicule (2) avec le support (18) détaché du corps de véhicule (2) par le second boulon de fixation (92).

11. Motocyclette selon la revendication 10, dans laquelle les trous de fixation (18a, 18b) du support (18) sont adaptés à fixer le support (18) sur le corps de véhicule (2) avec l'élément de base (19) détaché du corps de véhicule (2) par le premier boulon de fixation (91).

12. Motocyclette selon les revendications 10 ou 11, dans laquelle au moins un autre des trous de fixation (19a, 19b) de l'élément de base (19) est adapté à fixer l'élément de base (19) sur le corps de véhicule (2) par le premier boulon de fixation (91).
